# EUROPEAN PATENT APPLICATION

(11) **EP 4 660 744 A1**
(43) Date of publication of application: **10.12.2025**
(21) Application number: 25315190.6
(22) Date of filing: 28.05.2025
(51) Int. Cl.: G06F 1/03, H03K 7/08

(54) **SINE WAVE GENERATION BASED ON A FLEXIBLE PULSE WIDTH MODULATION TECHNIQUE**

(30) Priority: 05.06.2024 US 202418734292
(71) Applicant: STMicroelectronics International N.V., 1228 Plan-les-Ouates, Geneva (CH)
(72) Inventor: ANGRILLI, Riccardo, 26013 CREMA (CREMONA) (IT); COLOMBO, Filippo, 20900 MONZA (MONZA BRIANZA) (IT); AUBENAS, Charles, 75013 PARIS (FR); CASIRAGHI, Mattia, 20844 TRIUGGIO (MONZA BRIANZA) (IT)
(74) Representative: Buzzi, Notaro & Antonielli d'Oulx S.p.A.

(57) **Abstract**

Apparatuses, systems, and methods for sine wave generation based on a flexible pulse width modulation (PWM) technique. An exemplary apparatus may comprise a sine wave generator circuitry (102; 304; 402) and a pulse width modulation timer circuitry (108; 329; 424) coupled to the sine wave generator circuitry. The sine wave generator circuitry may comprise a phase accumulator circuitry (104; 304; 404) and a phase to amplitude conversion circuitry (106; 316; 414) coupled to the phase accumulator circuitry. The phase accumulator circuitry may be configured to receive a digital input value (101; 301; 401) and output phase values (103; 309; 405). The phase to amplitude conversion circuitry may be configured to receive the phase values and output digital sine values. The pulse width modulation timer circuitry may be configured to receive the digital sine values and output at least one pulse width modulation signal (325A, 325B; 425A, 425B) for generation of an analog carrier wave signal (107; 331; 513). A frequency of the analog carrier wave signal (107; 331; 513) may be based on the digital input value (101; 301; 401).

## Description

### Technological field

Example embodiments of the present disclosure relate generally to sine wave generation based on a flexible pulse width modulation (PWM) technique.

### Background

Resolver sensors may be used for determining a position of an electric motor or motor shaft. For example, in response to an analog sine wave excitation signal input, a resolver sensor may output two modulated feedback signals that are indicative of the angular position of an electric motor.

New techniques for generating an analog sine wave excitation signal are needed. The inventors have identified numerous areas of improvement in the existing technologies and processes, which are the subjects of embodiments described herein. Through applied effort, ingenuity, and innovation, many of these deficiencies, challenges, and problems have been solved by developing solutions that are included in embodiments of the present disclosure, some examples of which are described in detail herein.

### Summary

Various embodiments described herein relate to sine wave generation based on a flexible pulse width modulation (PWM) technique. Specifically, one or more embodiments relate to a carrier wave generator having the features specifically set forth in the claims that follow. Embodiments moreover concern a related system and method.

The invention is defined by the appended claims, which are an integral part of the technical teaching of the disclosure provided herein.

In accordance with some embodiments of the present disclosure, an example carrier wave generator is provided. The example carrier wave generator comprises:
- a sine wave generator circuitry, wherein the sine wave generator circuitry comprises a phase accumulator circuitry and a phase to amplitude conversion circuitry coupled to the phase accumulator circuitry, wherein the phase accumulator circuitry is configured to receive a digital input value and output a set of phase values, and wherein the phase to amplitude conversion circuitry is configured to receive the set of phase values and output a set of digital sine values; and
- a pulse width modulation timer circuitry coupled to the sine wave generator circuitry, wherein the pulse width modulation timer circuitry is configured to receive the set of digital sine values and output at least one pulse width modulation signal for generation of an analog carrier wave signal, wherein a frequency of the analog carrier wave signal is based at least in part on the digital input value.

In some embodiments, the phase accumulator circuitry and the phase-to-amplitude conversion circuitry comprise a numerically controlled oscillator circuitry.

In some embodiments, the phase to amplitude conversion circuitry comprises a coordinate rotation digital computer circuitry.

In some embodiments, the phase accumulator circuitry is further configured to receive the digital input value from a user of the carrier wave generator via a user interface.

In some embodiments, the pulse width modulation timer circuitry is further configured to receive a kernel clock frequency value from a user of the system via a user interface, and wherein a resolution associated with the pulse width modulation timer circuitry is based at least in part on the kernel clock frequency value.

In some embodiments, the at least one pulse width modulation signal comprises a first pulse width modulation signal and a second pulse width modulation signal that is complementary to the first pulse width modulation signal.

In some such embodiments, the pulse width modulation timer circuitry is coupled to an amplifier and filter circuitry, and wherein the amplifier and filter circuitry is configured to receive the at least one pulse width modulation signal and output the analog carrier wave signal.

In some embodiments, the digital input value is based at least in part on at least one of the following: the frequency associated with the analog carrier wave signal, a second frequency associated with a divided clock signal input to the sine wave generator circuitry, or a bit-length associated with the phase accumulator circuitry.

In accordance with some embodiments of the present disclosure, an example system is provided. The example system comprises:
- a carrier wave generator comprising: a sine wave generator circuitry, wherein the sine wave generator circuitry comprises a phase accumulator circuitry and a phase-to-amplitude conversion circuitry coupled to the phase accumulator circuitry, wherein the phase accumulator circuitry is configured to receive a digital input value and output a set of phase values, and wherein the phase-to-amplitude conversion circuitry is configured to receive the set of phase values and output a set of digital sine values; and
- a pulse width modulation timer circuitry coupled to the sine wave generator circuitry, wherein the pulse width modulation timer circuitry is configured to receive the set of digital sine values and output at least one pulse width modulation signal; and
- an amplifier and filter circuitry coupled to the carrier wave generator, wherein the amplifier and filter circuitry is configured to receive the at least one pulse width modulation signal and output an analog carrier wave signal, wherein a frequency of the analog carrier wave signal is based at least in part on the digital input value.

In some embodiments, the phase accumulator circuitry and the phase-to-amplitude conversion circuitry comprise a numerically controlled oscillator circuitry.

In some embodiments, the phase to amplitude conversion circuitry comprises a coordinate rotation digital computer circuitry.

In some embodiments, the phase accumulator circuitry is further configured to receive the digital input value from a user of the carrier wave generator via a user interface.

In some embodiments, the pulse width modulation timer circuitry is further configured to receive a kernel clock frequency value from a user of the system via a user interface, and wherein a resolution associated with the pulse width modulation timer circuitry is based at least in part on the kernel clock frequency value.

In some embodiments, the at least one pulse width modulation signal comprises a first pulse width modulation signal and a second pulse width modulation signal that is complementary to the first pulse width modulation signal.

In some embodiments, the digital input value is based at least in part on at least one of the following: the frequency associated with the analog carrier wave signal, a second frequency associated with a divided clock signal input to the sine wave generator circuitry, or a bit-length associated with the phase accumulator circuitry.

In accordance with some embodiments of the present disclosure, an example method is provided. The example method comprises:
- obtaining a digital input value at a sine wave generator circuitry, wherein the sine wave generator circuitry comprises a phase accumulator circuitry and a phase-to-amplitude conversion circuitry coupled to the phase accumulator circuitry, wherein the phase accumulator circuitry is configured to output a set of phase values based at least in part on the digital input value, and wherein the phase-to-amplitude conversion circuitry is configured to receive the set of phase values and output a set of digital sine values; and
- outputting at least one pulse width modulation signal via a pulse width modulation timer circuitry coupled to the sine wave generator circuitry, wherein the pulse width modulation timer circuitry is configured to output the at least one pulse width modulation signal based at least in part on the set of digital sine values, and wherein a frequency associated with the at least one pulse width modulation signal is based at least in part on the digital input value.

In some embodiments, the phase accumulator circuitry and the phase-to-amplitude conversion circuitry comprise a numerically controlled oscillator circuitry.

In some embodiments, the phase to amplitude conversion circuitry comprises a coordinate rotation digital computer circuitry.

In some embodiments, the method comprises obtaining a kernel clock frequency value at the pulse width modulation timer circuitry, wherein a resolution associated with the pulse width modulation timer circuitry is based at least in part on the kernel clock frequency value.

In some embodiments, the at least one pulse width modulation signal comprises a first pulse width modulation signal and a second pulse width modulation signal that is complementary to the first pulse width modulation signal.

The above summary is provided merely for purposes of summarizing some example embodiments to provide a basic understanding of some aspects of the disclosure. Accordingly, it will be appreciated that the above-described embodiments are merely examples and should not be construed to narrow the scope or spirit of the disclosure in any way. It will also be appreciated that the scope of the disclosure encompasses many potential embodiments in addition to those here summarized, some of which will be further described below.

### Brief summary of the drawings

Having thus described certain example embodiments of the present disclosure in general terms, reference will now be made to the accompanying drawings, which are not necessarily drawn to scale, and wherein:
- FIG. 1 illustrates an exemplary carrier wave generator configured for sine wave generation based on a flexible PWM technique in accordance with one or more embodiments of the present disclosure;
- FIG. 2 illustrates exemplary graphs of sine waves generated based on a flexible PWM technique in accordance with one or more embodiments of the present disclosure;
- FIG. 3 illustrates an exemplary carrier wave generator configured for sine wave generation based on a flexible PWM technique in accordance with one or more embodiments of the present disclosure;
- FIG. 4 illustrates an exemplary carrier wave generator configured for sine wave generation based on a flexible PWM technique in accordance with one or more embodiments of the present disclosure;
- FIG. 5 illustrates an exemplary resolver sensor system configured for sine wave generation based on a flexible PWM technique in accordance with one or more embodiments of the present disclosure;
- FIG. 6 illustrates a flowchart of operations for a carrier wave generator in accordance with one or more embodiments of the present disclosure; and
- FIG. 7 illustrates an exemplary device in accordance with one or more embodiments of the present disclosure.

### Detailed description

Some embodiments of the present disclosure will now be described more fully herein with reference to the accompanying drawings, in which some, but not all, embodiments of the disclosure are shown. Indeed, various embodiments of the disclosure may be embodied in many different forms and should not be construed as limited to the embodiments set forth herein; rather, these embodiments are provided so that this disclosure will satisfy applicable legal requirements. Like reference numerals refer to like elements throughout.

As used herein, the term "comprising" means including but not limited to and should be interpreted in the manner it is typically used in the patent context. Use of broader terms such as comprises, includes, and having should be understood to provide support for narrower terms such as consisting of, consisting essentially of, and comprised substantially of.

The phrases "in various embodiments," "in one embodiment," "according to one embodiment," "in some embodiments," and the like generally mean that the particular feature, structure, or characteristic following the phrase may be included in at least one embodiment of the present disclosure and may be included in more than one embodiment of the present disclosure (importantly, such phrases do not necessarily refer to the same embodiment).

The word "example" or "exemplary" is used herein to mean "serving as an example, instance, or illustration." Any implementation described herein as "exemplary" is not necessarily to be construed as preferred or advantageous over other implementations.

If the specification states a component or feature "may," "can," "could," "should," "would," "preferably," "possibly," "typically," "optionally," "for example," "often," or "might" (or other such language) be included or have a characteristic, that a specific component or feature is not required to be included or to have the characteristic. Such a component or feature may be optionally included in some embodiments or it may be excluded.

The use of the term "circuitry" as used herein with respect to components of a system or an apparatus should be understood to include particular hardware configured to perform the functions associated with the particular circuitry as described herein. The term "circuitry" should be understood broadly to include hardware and, in some embodiments, software for configuring the hardware. For example, in some embodiments, "circuitry" may include processing circuitry, communications circuitry, input/output circuitry, and the like. In some embodiments, other elements may provide or supplement the functionality of particular circuitry.

### Overview

Various embodiments of the present disclosure are directed to improved generation of analog sine waves.

Resolver sensors are a type of position sensor used for electric motor or motor shaft positioning. For example, a resolver sensor may be used for determining the rotational position of an electric motor or motor shaft. The resolver sensor may receive an analog sine wave excitation signal as an input and, in response, output modulated feedback signals (e.g., two modulated feedback signals). The modulated feedback signals may be indicative of the rotational (e.g., angular) position of the electric motor. In other words, resolver sensors may use an analog sine wave excitation signal (e.g., with a particular resolution) to provide two modulated feedback signals that are related to the position (e.g., angle) of an electric motor. In some examples, a resolver sensor includes a resolver interface, which includes circuitry embedded in a system on a chip (SoC), for example, to support the resolver systems.

Conventional methods for generating analog sine waves (also referred to herein as carrier waves) for resolver sensors may be rigid and lead to increased power consumption. For example, some conventional methods for generating analog sine waves rely on a local memory approach in which digital values are stored (e.g., prestored) in local memory and scanned sequentially in order to provide digital values of a sine wave. In such an example, the digital values are converted to an analog sine wave using a digital to analog converter (DAC). In some cases, however, the digital values prestored in the local memory are fixed (e.g., the number and size of samples pre-stored in memory is fixed), which may lead to reduced flexibility and/or increased die size. For example, because the number and size of the samples pre-stored in memory is fixed, the resolution of the sine wave to be generated is also fixed. In order to increase the resolution of the sine wave, a user may increase the quantity of values stored in the local memory. However, increasing the quantity of values may necessitate an increase in the size of the local memory, thereby increasing in die size.

Other conventional methods for generating analog sine waves may rely on a software approach, in which a central processing unit (CPU) is used to generate and calculate the digital values of the sine wave. In such an example, the digital values are converted to an analog sine wave using a DAC. In some cases, however, the software uses interrupt service routines to invoke hardware (e.g., for generation of the analog sine wave based on the digital values), which may lead to increased processing costs, as well as increased latency. That is, the interrupt service routines may increase data traffic inside the SoC (e.g., inside an SoC interconnect) and, consequently, increased power consumption and latency.

The present disclosure is generally directed to improved carrier wave generators. The present disclosure includes, among other things, improved methods for generating digital values for a sine wave.

Various embodiments of carrier wave generators of the present disclosure use a direct digital synthesis (DDS) technique with an internal pulse width modulation (PWM) timer to generate analog sine waves. In some embodiments, a carrier wave generator includes a digital counter with a configurable step. For example, an input to the digital counter may include a frequency control word (e.g., a digital value), which is a function of a bit-length associated with the digital counter, a divided clock frequency, and a frequency of the analog sine wave (e.g., carrier wave) output by the carrier wave generator. Accordingly, a user may use the frequency control word to dynamically adjust the frequency of the carrier wave. In some embodiments, the user may dynamically adjust frequency control word, and thus the frequency of the carrier wave, via a dedicated software register. In some such embodiments, the user may adjust the frequency of the carrier wave over a relatively wide range (e.g., about 10 kHz to about 40 kHz) and with a relatively fine resolution. In some examples, by using a digital counter with a configurable step, the carrier wave generator may provide for increased flexibility.

In some embodiments, the digital counter is coupled to a phase-to-amplitude converter. For example, the digital counter may be an example of a phase accumulator, which may output a set of phase values based on the input frequency control word. In some embodiments, the phase accumulator and the phase-to-amplitude converter may be together embodied in a numerically controlled oscillator (NCO). That is, the carrier wave generator may include an NCO that includes the phase accumulator and the phase-to-amplitude converter. The set of phase values output from the phase accumulator may be input into the phase-to-amplitude converter. The phase-to-amplitude converter may use the set of phase values (e.g., rotations) to calculate a set of digital sine values. For example, in some embodiments, the phase-to-amplitude converter includes a coordinate rotation digital computer (CORDIC), which performs real-time phase to amplitude conversion based on the output of the phase accumulator. In other words, the phase-to-amplitude converter (e.g., a CORDIC) may include a hardware-efficient iterative method, which uses rotations (e.g., angle values determined from the output from the digital counter) to calculate digital sine values. In some examples, by using the phase-to-amplitude converter to generate digital sine values in real-time, the carrier wave generator may provide for reduced die size and reduced latency.

In some embodiments, the phase-to-amplitude converter is coupled to a digital-to-analog converter. For example, the carrier wave generator may be included in a SoC, which also includes an internal digital-to-analog converter. In some examples, the digital-to-analog converter includes a pulse-width modulation (PWM) timer, in which the width of a pulse output from the PWM timer is a function of the amplitude of an input signal. For example, a period of a digital signal output from the PWM timer is fixed, while the duty cycle of the digital signal varies (e.g., between 0% and 100%) based on the input signal. The duty cycle is the amount of time the digital PWM signal is on (e.g., in an "active" state) relative to the period of the digital PWM signal. That is, each digital sine value output from the phase-to-amplitude converter may correspond to (e.g., encode) a duty cycle for the PWM timer. Accordingly, a voltage provided by a digital signal output from the PWM timer is proportional to the duty cycle of the digital signal. In one non-limiting example, a 0% duty cycle may provide a 0 voltage while a 100% duty cycle may provide a peak-to-peak voltage. Thus, the carrier wave generator may generate an analog sine wave by using the digital sine values to time-vary the duty cycle (and thus the voltage) of a digital signal output from the PWM timer. As described herein a flexible PWM technique refers to a PWM technique in which a period of the PWM timer is dynamically configurable. For example, the SoC may include embedded custom logic for driving the PWM timer. In such an example, the SoC may include a kernel clock, and the period of the PWM timer may be equal to the period of the kernel clock. In some embodiments, in accordance with the flexible PWM technique, a user may select the period of the kernel clock (e.g., may select the kernel clock frequency) via the dedicated software register. As such, the present disclosure may provide for dynamically modifying (e.g., configuring) the period of the PWM timer. Additionally, by providing for a sine wave generator (e.g., a sine duty cycle generator) that generates the duty cycles for the PWM timer in real-time, the present disclosure may provide for a reduced die size of the SoC, and increase flexibility of the carrier wave generator for example, relative to techniques which may rely on a fixed set of digital values (e.g., a look up table) stored in local memory.

### Exemplary Apparatuses, Systems, and Methods

Embodiments of the present disclosure herein include systems and apparatuses for sine wave generation described herein may be implemented in various embodiments. An exemplary embodiment includes a carrier generator configured to use a sine wave generator circuitry and a digital-to-analog converter circuitry to generate sine waves in accordance with one or more embodiments of the present disclosure.

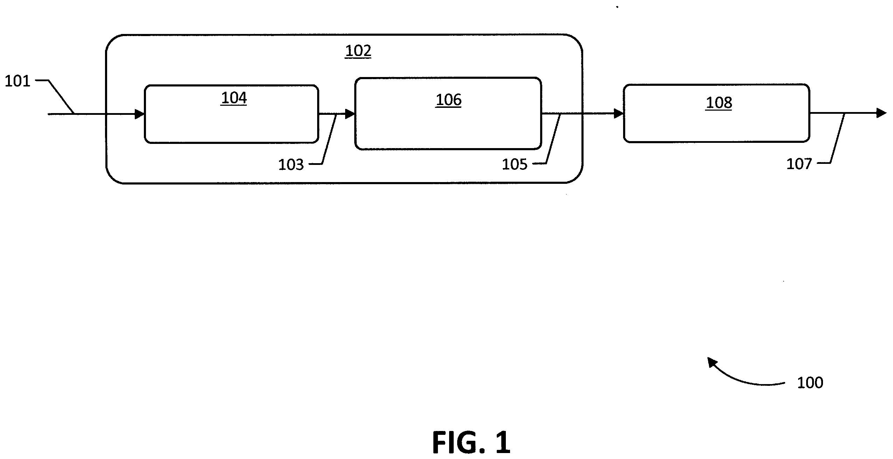

FIG. 1 illustrates an exemplary carrier wave generator 100 configured for sine wave generation based on a flexible PWM technique in accordance with one or more embodiments of the present disclosure. As depicted, the carrier wave generator 100 includes a sine wave generator circuitry 102 and a digital-to-analog converter circuitry 108.

In some embodiments, the carrier wave generator 100 is configured to generate a set of digital values of a sine wave using the sine wave generator circuitry 102. For example, as depicted, the sine wave generator circuitry 102 includes a phase accumulator circuitry 104 and a phase-to-amplitude conversion circuitry 106, in which the sine wave generator circuitry 102 is configured to generate the set of digital values of the sine wave using the combination of the phase accumulator circuitry 104 and the phase-to-amplitude conversion circuitry 106. In some embodiments, the phase accumulator circuitry 104 (e.g., with a configurable STEP) is configured to produce a set of angle values. For example, the phase accumulator circuitry 104 may receive a digital value 101 (e.g., the configurable STEP, a frequency control word) and output a set of phase values 103 (e.g., corresponding to the set of angle values) based on the digital value 101.

As depicted, the phase accumulator circuitry 104 may be coupled to the phase-to-amplitude conversion circuitry 106. Accordingly, the phase-to-amplitude conversion circuitry 106 may receive the set of phase values 103 and output a set of digital sine values 105. In some embodiments, the phase-to-amplitude conversion circuitry 106 may be an example of a CORDIC that is configured to execute a real-time calculation of digital sine values based on input angle values (e.g., the set of phase values 103). As described herein, a real-time calculation refers to a calculation that occurs in response to receiving an input (e.g., immediate after receiving the input, such as within a few milliseconds).

As depicted, the digital-to-analog converter circuitry 108 may receive the set of digital sine values 105 and output an analog signal 107. That is, the digital-to-analog converter circuitry 108 may be configured to convert the set of digital sine values 105 into an analog sine wave (e.g., a carrier wave, the analog signal 107). In some examples, the carrier wave generator 100 is included in an SoC. In some such examples, the digital-to-analog converter circuitry 108 may be configured to convert the set of digital sine values 105 into the analog signal 107 with or without support of one or more component external to the SoC. For example, in some embodiments, the digital-to-analog converter circuitry 108 may include a PWM timer. In such an example the digital-to-analog converter circuitry 108 may be configured to generate the analog signal 107 (e.g., a sine wave) in accordance with (e.g., based on) a flexible PWM technique.

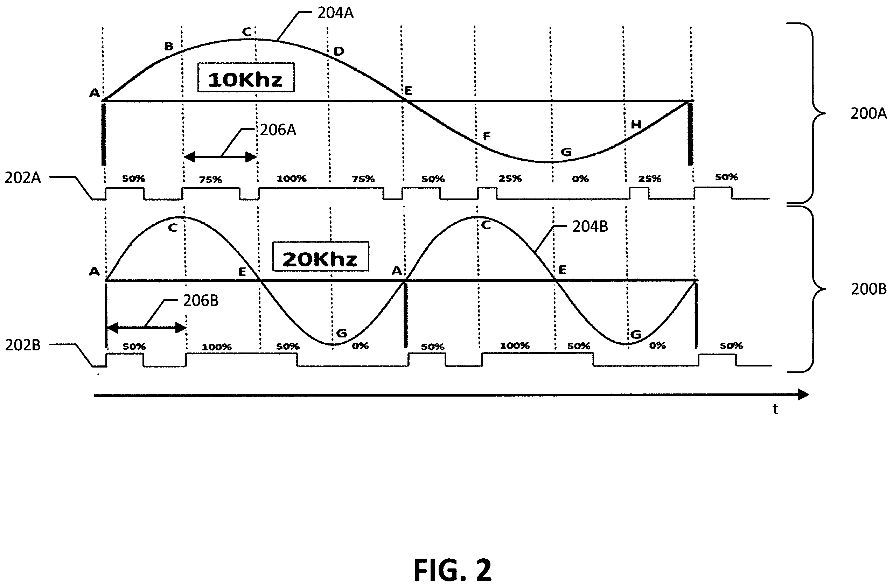

FIG. 2 illustrates an example graph 200A and an example graph 200B of sine waves generated based on a flexible PWM technique in accordance with one or more embodiments of the present disclosure.

Various embodiments of the present disclosure provide for analog sine wave generation using a direct digital synthesis (DDS) technique with an internal PWM timer, in which embedded custom logic is used to drive the internal PWM timer. A period of a PWM signal (e.g., a PWM signal 202A, a PWM signal 202B) output from the PWM timer may be fixed, while a corresponding duty cycle of the PWM signal may vary (e.g., between 0% and 100%). For example, the PWM timer is configured with a period (e.g., a period 206A, a period 206B). A duty cycle of the PWM signal during a period refers to the amount of time the digital signal is on (e.g., "active" state) relative to the period. Accordingly, as depicted in the graph 200A, the duty cycle of the PWM signal 202A during the period 206A is 75%. Additionally, as depicted in the graph 200B, the duty cycle of the PWM signal 202B during the period 206B is 50%. A voltage (e.g., an average voltage) of a PWM signal output from the PWM timer is proportional to the duty cycle. For example, a voltage of the PWM signal 202A during the period 206A is 75% of a peak-to-peak voltage associated with the PWM timer. Accordingly, point B in the graph 200A corresponds to an amplitude that is 75% of the peak amplitude, which occurs at point C (where the duty-cycle is 100%, and thus the voltage is 100% of the peak-to-peak voltage). Additionally, a voltage of the PWM signal 202B during the period 206B is 50% of the peak-to-peak voltage associated with the PWM timer. Accordingly, point A in the graph 200B corresponds to an amplitude that is 50% of the peak amplitude, which occurs at point C (where the duty-cycle is 100%, and thus the voltage is 100% of the peak-to-peak voltage). A carrier generator may use the PWM timer to generate an analog sine wave (e.g., an analog sine wave 204A, an analog sine wave 204B) by varying the duty cycle of a digital signal output from the PWM timer over time.

In some embodiments, the duty cycle of a digital signal output from the PWM timer is based on a digital value input into the PWM timer. Accordingly, in such embodiments, each digital value input into the PWM timer corresponds to a respective duty cycle for the PWM timer. In some embodiments, the digital values input into the PWM timer (e.g., and thus the duty cycle values) are internally generated. For example, the carrier wave generator may include a sine wave generator configured to generate a set of digital values in real-time. In other words, the sine wave generator (e.g., a sine duty cycle generator) is configured to generate the duty cycles for the PWM timer in real-time, thereby reducing the die size of the SoC, and increasing flexibility of the carrier wave generator for example, relative to techniques which may rely on a fixed set of digital values (e.g., a look up table) stored in local memory, and reducing latency relative to techniques which may rely on a CPU to generate the duty cycles for the PWM.

In some embodiments, a frequency of an analog sine wave output from the PWM timer (e.g., an excitation sine wave) may be configured by a user of the carrier generator. For example, the frequency of the analog sine wave 204A (e.g., 10 kHz) and the frequency of the analog sine wave 204B (e.g., 20 kHz) may be programmed by a user via a dedicated software register. In some embodiments, the frequency of the analog sine wave may be programmed over a relatively wide range (e.g., about 10kHz to about 40hHz) and with a relatively fine resolution (e.g., up to a threshold resolution value, such as about 9.5 Hz). In some embodiments, the frequency of the analog sine wave may be programmed via a frequency control word (e.g., selected by a user via the dedicated software register). In some such embodiments, a frequency resolution of the analog sine wave (e.g., how finely the resulting frequency of the generated analog sine wave may be changed by changing the frequency control word) may be based on a number of bits associated with a phase accumulator (e.g., NCO counter bits), which is used to generate the duty cycles for the PWM timer.

In some embodiments, a resolution of the PWM timer corresponds to a granularity with which the duty cycle may be modulated (e.g., how finely the respective duty cycle of each PWM period may be modulated in order to accurately reproduce the corresponding sine wave sample, for example, by successive digital-to-analog conversion). In some embodiments, the resolution of the PWM timer may be based on a ratio between a peripheral clock frequency and a kernel clock frequency of the sine wave generator. In some embodiments, the ratio may be denoted as ARR. Accordingly, in some embodiments, the PWM resolution may be configured (e.g., selected) by the user. For example, the kernel clock period may be defined by the user via a software programmable register (e.g., defined according to a selected kernel clock frequency generated by a SoC clock controller). The period of the PWM timer corresponds to a duration after which the PWM pattern repeats (e.g., a new duty cycle of the PWM signal 202A may begin after a duration of a PWM period 206A and a new duty cycle of the PWM signal 202B may begin after a duration of a PWM period 206B).

In some embodiments, a number of PWM samples (e.g., points per period of the generated analog sine wave) may be based on a ratio between the frequency of the kernel clock and the frequency of the analog sine wave to be generated. For example, 8 PWM samples (e.g., 8 duty cycles, which correspond to points A-H in graph 200A) may be used to generate a period of the analog sine wave 204A (e.g., an analog sine wave with a frequency of about 10 kHz). Additionally, 4 PWM samples (e.g., 4 duty cycles, which correspond to points A-G in graph 200B) may be used to generate a period of the analog sine wave 204B (e.g., an analog sine wave with a frequency of about 20 kHz).

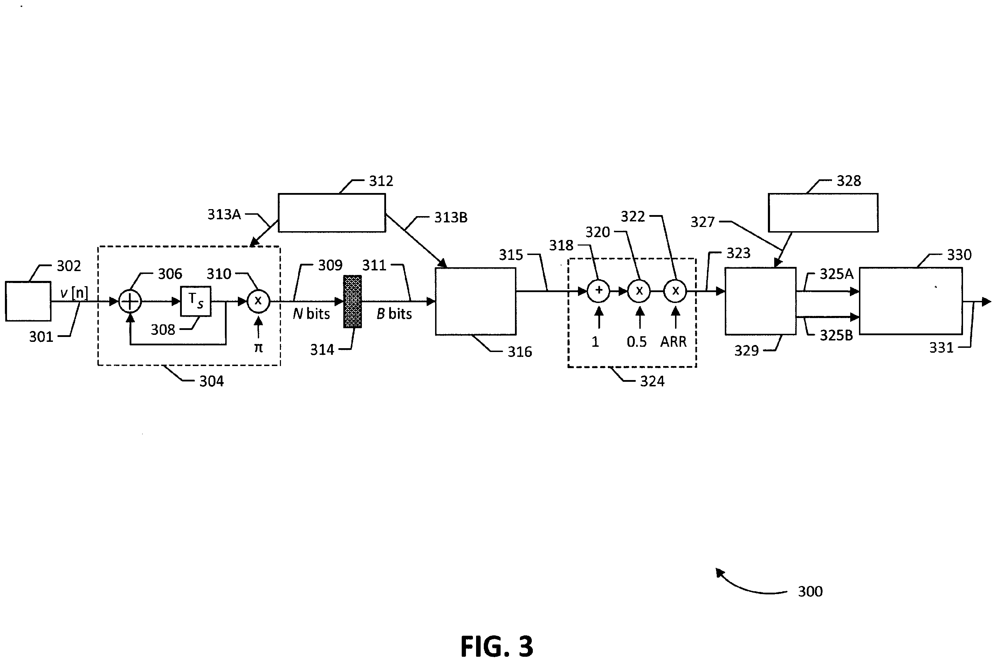

FIG. 3 illustrates an exemplary carrier wave generator 300 configured for sine wave generation based on a flexible PWM technique in accordance with one or more embodiments of the present disclosure.

As depicted, an FCW 302 (e.g., a frequency control word register) may output a digital value 301. In some embodiments, a user may select the digital value 301 via the FCW 302. For example, the user may use a user interface to select the digital value 301 (e.g., a frequency control word), which may be provided to (and stored at) the FCW 302. The digital value 301 corresponds to a frequency of an analog signal 331 output from the carrier wave generator 300. In other words, the digital value 301 is indicative of the frequency of the analog signal 331. Accordingly, the user may select a digital value that corresponds to a desired frequency for the analog signal 331.

A phase accumulator circuitry 304 may be configured to output a set of phase values based on the digital value 301. For example, the phase accumulator circuitry 304 may be an example of a digital counter, which may count in accordance with the digital value 301 (e.g., a step). In some embodiments, as depicted, the phase accumulator circuitry 304 includes an adder circuitry 306 and a phase register circuitry 308 configured with a sampling time (Tₛ). In some such embodiments, the digital value 301 is input to the adder circuitry 306 coupled to the phase register circuitry 308. The phase register circuitry 308 is configured to output a set (e.g., sequence) of phase values over the sampling time (Tₛ), in which each phase value of the set of phase values is generated by incrementing (e.g., via the adder circuitry 306) a generated phase value (e.g., a starting phase value or a previously generated phase value) by an amount that is based on the digital value 301. In some examples, incrementing the generated phase value is in response to a divided clock input signal 313A.

For example, the phase register circuitry 308 may be a digital counter with a quantity of digital states. Accordingly, the phase register circuitry 308 may store a digital state (e.g., a binary value corresponding to a starting phase value or a previously generated phase value) and may increment the digital state of the phase register circuitry 308 in response to a divided clock input signal 313A (e.g., for each system clock input pulse from a divided clock circuitry 312). The size of the increment is based on the digital value 301. For example, the phase accumulator circuitry 304 may include a binary counter (e.g., with an input step corresponding to the digital value 301), which is configured to scan angles from 0° to 360° over the sampling time (e.g., based on the digital value 301). In some such examples, the set of binary values output from the phase register circuitry 308 may be converted into a set of radian values (e.g., corresponding to respective angles) via a multiplier circuitry 310. That is, the phase accumulator circuitry 304 includes a multiplier circuitry 310, which is configured to convert the set of binary values output from the phase register circuitry 308 to a first set of phase value 309 (e.g., radian values), for example, by multiplying the set of binary values by *π* (or some other suitable value). In some embodiments, such as embodiments in which the phase accumulator circuitry 304 is a modulo N digital counter with 2^{N} digital states, a phase value of the first set of phase value 309 (e.g., each phase value) may be expressed using N bits.

That is, the phase accumulator circuitry 304 (e.g., the phase register circuitry 308 within the phase accumulator circuitry 304) accumulates phase values within a range, which may correspond to a full cycle of a waveform (e.g., a period of a sine wave), such as 0 to 2*π* radians (e.g., 0° to 360°). In other words, to scan the angles from 0° to 360°, the phase accumulator circuitry 304 accumulates phase values within a range of 0 to 2*π* radians. In one non-limiting example, for a modulo N digital counter with 2^{N} digital states, the phase accumulator circuitry 304 may map the 2^{N} digital states to 0 to 2*π* radians, in which each phase value corresponds to a particular angle within the cycle of the waveform. Additionally, the phase accumulator circuitry 304 may start at 0° (or some other suitable phase value) and may increment the phase value (e.g., digital state) in response to the divided clock input signal 313A (e.g., at each divided clock input signal 313A). Accordingly, the phase accumulator circuitry 304 (e.g., binary counter) may restart counting from 0° when the phase value (e.g., the digital state of the phase register circuitry 308) becomes greater than 360° (e.g., greater than 2*π* radians). A frequency at which the phase accumulator circuitry 304 scans the angles from 0° to 360° (e.g., completes a full cycle of the waveform, scans 0 to 2*π* radians) is based on the size of the increment, which may be determined based on the digital value 301. Accordingly, in some embodiments, the digital value 301 (v [n]) may be a function of a bit-length (n) of a phase accumulator circuitry 304, a frequency associated with the divided clock circuitry 312 (e.g., the sampling time (Tₛ)), and a desired frequency of the analog signal 331 to be generated. The carrier wave generator 300 may include a peripheral clock, and the divided clock circuitry 312 may be configured to divide a frequency associated with the peripheral clock, such that the divided clock circuitry 312 may output the divided clock input signal 313A (and a divided clock input signal 313B) according to a different frequency (e.g., a lower frequency) than the peripheral clock frequency. In some embodiments, the divided clock circuitry 312 may be referred to as a kernel clock.

In some embodiments, a CORDIC circuitry 316 includes an algorithm that outputs an amplitude of a sine wave based on a corresponding phase of the sine wave. In some such embodiments, the number of bits used to drive the CORDIC circuitry 316 (e.g., B bits) may be less than N bits. Accordingly, the carrier wave generator 300 may include a phase truncation circuitry 314, which is configured to reduce the number of bits output by the phase accumulator circuitry 304 to the number of bits used to drive the CORDIC circuitry 316 (e.g., is configured to convert the first set of phase value 309 into a second set of phase values 311, which may each be expressed by B bits).

In some embodiments, the CORDIC circuitry 316 is configured to receive the second set of phase values 311 and output a set of digital sine values 315. In some embodiments, the CORDIC circuitry 316 may be synchronized with the phase accumulator circuitry 304 via the divided clock circuitry 312. For example, the CORDIC circuitry 316 may be configured to output the set of digital sine values 315 based on a divided clock input signal 313B. In other words, the CORDIC circuitry 316 (e.g., a hardware-efficient iterative method) uses iterative rotations to calculate an amplitude of a sine wave (e.g., a digital value of a sine wave, such as points A, B, C, D, E, F, G, and H illustrated in FIG. 2), in which a rate at which the iterations occur is based on the divided clock circuitry 312. Accordingly, the phase accumulator circuitry 304 and the CORDIC circuitry 316 enable the carrier wave generator to calculate digital values of a sine wave in real-time (e.g., without using the local memory).

In some embodiments, the carrier wave generator includes an arithmetic circuitry 324, which is configured to scale the set of digital sine values 315 to a scale associated with a PWM timer circuitry 329 (e.g., to the full scale of the PWM timer circuitry). For example, the arithmetic circuitry 324 includes a first arithmetic circuitry 318 configured to add 1 (or another suitable value) to the set of digital sine values 315 and a second arithmetic circuitry 320 configured to multiply the output of the first arithmetic circuitry 318 by 0.5 (or another suitable value). Additionally, the PWM timer circuitry 329 may be synchronized according to (e.g., may generate PWM signals according to a clock input signal 327 from a peripheral clock circuitry 328 (e.g., a peripheral clock) in which a frequency associated with the peripheral clock circuitry 328 may be the peripheral clock frequency. Accordingly, the arithmetic circuitry 324 may also include a third arithmetic circuitry 322 configured to multiply the output of the second arithmetic circuitry 320 by ARR (e.g., the ratio of ratio between a peripheral clock frequency and a kernel clock frequency of the sine wave generator). In some embodiments, ARR may correspond to a clock division factor (e.g., a clock division factor (CDF) value) used to determine the divided clock frequency associated with the divided clock circuitry 312.

As depicted, a scaled digital sine value 323 output from the arithmetic circuitry 324 is input into the PWM timer circuitry 329, which provides a PWM signal 325A and a PWM signal 325B. The PWM signal 325A and the PWM signal 325B may be examples of a PWM signal illustrated by and described with reference to FIG. 2.

As depicted, the PWM signal 325A and the PWM signal 325B may be input into an amplifier and filter circuitry 330. In some embodiments, the PWM signal 325B is a complementary signal of the PWM signal 325A. For example, in some embodiments, the PWM timer circuitry 329 is configured to provide a PWM signal and complementary PWM signal to drive an amplifier and a filter circuit (e.g., the amplifier and filter circuitry 330). In some examples, the amplifier and filter circuitry 330 is configured to filter the PWM signal 325A (e.g., permanently filter the PWM signal 325A ). For example, the PWM signal 325A may include a high frequency component and a low frequency component (e.g., may be a high frequency signal modulated at a low frequency). Accordingly, the amplifier and filter circuitry 330 may be configured to filter the high frequency component out of the PWM signal 325A (e.g., and amplify the low frequency component) to provide the analog signal 331. The analog signal 331 may be an example of an analog sine wave illustrated by and described with reference to FIG. 2. In some embodiments, the PWM signal 325A and the PWM signal 325B (e.g., the complementary PWM signals) may be used to drive the amplifier and filter circuitry 330 (e.g., an external amplifier and filter circuitry). For example, the amplifier may use differential inputs to generate (e.g., properly generate) an output.

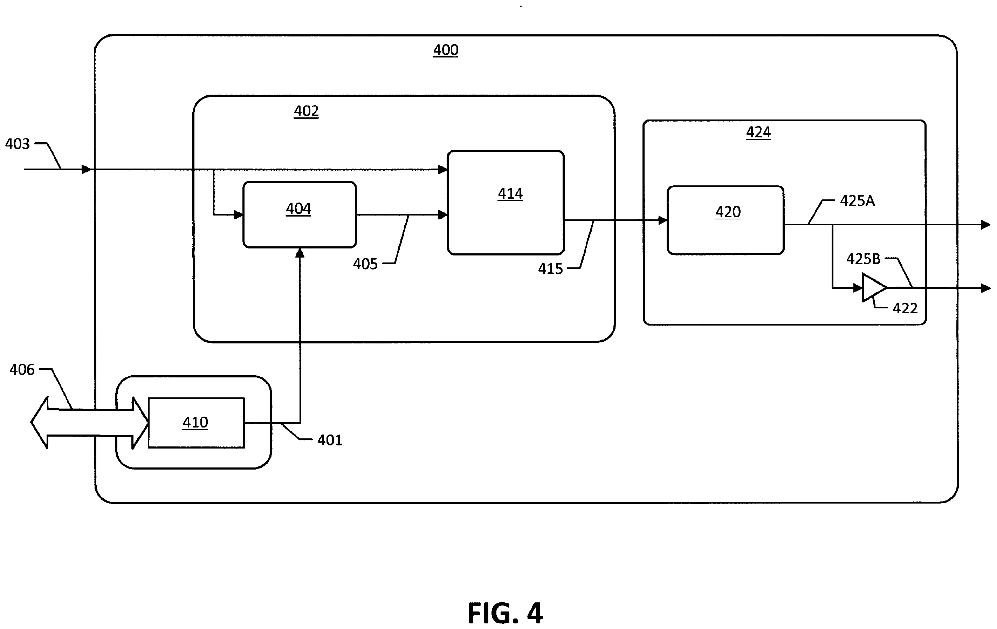

FIG. 4 illustrates an exemplary carrier wave generator 400 configured for sine wave generation based on a flexible PWM technique in accordance with one or more embodiments of the present disclosure. The carrier wave generator 400 may be an example of a carrier wave generator illustrated by and described with reference to FIGs. 1-3. For example, the carrier wave generator 400 may include a sine wave generator circuitry 402 coupled to a PWM timer circuitry 424. In some embodiments, the carrier wave generator 400 may be included in a microcontroller unit (MCU), such as an MCU used for traction inverter applications. In some such embodiments, the carrier wave generator 400 may be included in a resolver interface of the MCU.

As depicted, the carrier wave generator 400 includes the sine wave generator circuitry 402 and the PWM timer circuitry 424. The sine wave generator circuitry 402 includes a phase accumulator circuitry 404 and a CORDIC circuitry 414. The phase accumulator circuitry 404 may be an example of a phase accumulator circuitry illustrated by and described with reference to FIGs. 1-3. For example, the phase accumulator circuitry 404 may be an example of a digital counter (e.g., a binary counter) with a configurable step. Additionally, the CORDIC circuitry 414 may be an example of a CORDIC circuitry illustrated by and described with reference to FIG. 3. For example, the CORDIC circuitry 414 may be an example of a phase-to-amplitude conversion circuitry.

As depicted, the phase accumulator circuitry 404 may receive a digital input value 401. The digital input value 401 (e.g., a configurable step) may be a digital word (e.g., a frequency control word). For example, the carrier wave generator 400 may include an FCW register 410 (a frequency control word register), which may store the digital input value 401. In some embodiments, a user may select the digital input value 401 via a user interface. For example, the FCW register 410 may be coupled to an APB interface 406 (an advanced peripheral bus interface) through which the FCW register 410 may receive the digital input value 401 selected by the user via the user interface. The phase accumulator circuitry 404 may also receive a divided clock input signal 403. For example, the phase accumulator circuitry 404 may be configured to generate a set of phase values 405 in accordance with the divided clock input signal 403. In such an example, the set of phase values 405 may be based on the digital input value 401. For example, the phase accumulator circuitry 404 may be configured to generate the set of phase values 405 by incrementing a phase value (e.g., a starting phase value or a previously generated phase value) in response to the divided clock input signal 403 (e.g., for each divided clock pulse). A size of the increment may be based on the digital input value 401.

The CORDIC circuitry 414 may be configured to receive the set of phase values 405 and output a set of digital sine values 415. In some examples, a digital sine value of the set of digital sine values 415 may correspond to an amplitude of a waveform (e.g., a sine wave) at a particular phase (e.g., angle) within a cycle of the waveform. For example, a digital sine value may set a duty cycle for a period of the PWM timer and, as such, may correspond to the amplitude of the waveform during the period of the PWM timer.

The PWM timer circuitry 424 coupled to the sine wave generator circuitry, 402 may include a PWM logic circuitry 420. The PWM logic circuitry 420 is configured to receive the set of digital sine values 415 and output a PWM signal 425A. The PWM signal 425A may be an example of the PWM signal illustrated by and described with reference to FIGs. 1-3. For example, a period associated with the PWM signal 425A may be fixed, while a duty cycle of the PWM signal 425A may vary (e.g., between 0% and 100%) according to the set of digital sine values 415. In other words, the PWM timer circuitry 424 may use the set of digital sine values 415 to modulate the PWM signal 425A. Accordingly, the PWM signal 425A may include a high frequency component and a low frequency component (e.g., corresponding to the modulation of the PWM signal 425A). To obtain an analog signal based on the PWM signal 425A, the carrier wave generator 400 may use a lowpass filter to remove the high frequency component of the PWM signal 425A. For example, the carrier generator may input the PWM signal 425A into an amplifier and filter circuitry, which is configured to filter (e.g., permanently filter) the PWM signal 425A. In some examples, a complementary signal is used to drive the amplifier and filter circuitry. Accordingly, the PWM timer circuitry 424 may include an inverter 422 (e.g., an operational amplifier inverter) to generate a PWM signal 425B, which may be a complementary signal of the PWM signal 425B.

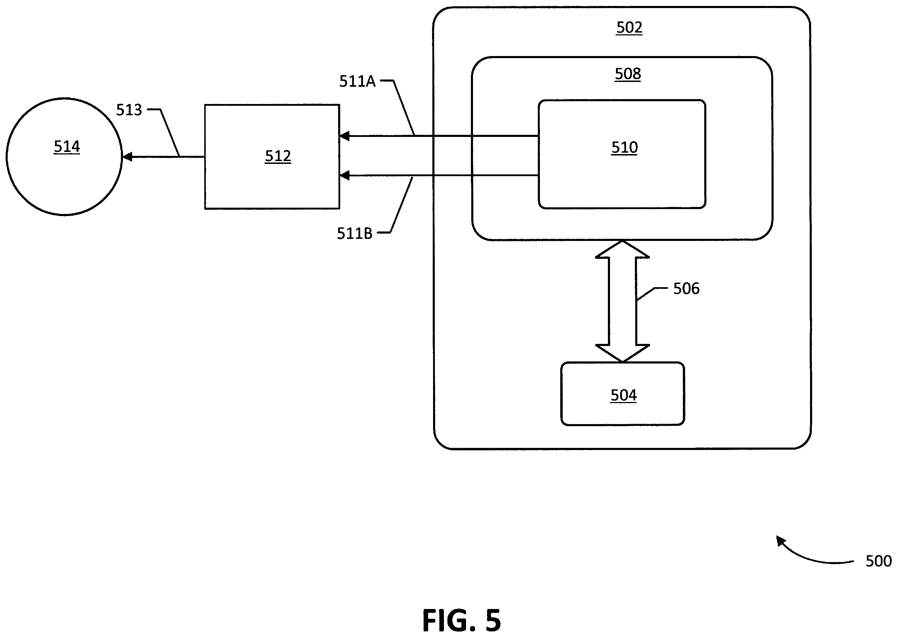

FIG. 5 illustrates an exemplary resolver sensor system 500 configured for sine wave generation based on a flexible PWM technique in accordance with one or more embodiments of the present disclosure. In some embodiments, the resolver sensor system 500 includes an MCU 502. The MCU 502 may include a CPU 504, which is coupled to a resolver interface 508 via an APB interface 506. In some such embodiments, the resolver interface 508 includes a carrier wave generator 510. The carrier wave generator 510 may be an example of a carrier wave generator illustrated by and described with reference to FIGs. 1-4. For example, the carrier wave generator 510 may include sine wave generator circuitry and PWM timer circuitry, which are configured to generate since waves using a flexible PWM technique. In some examples, in accordance with the flexible PWM technique, the carrier wave generator may receive (e.g., via the APB interface 506) a digital input value and may output a PWM signal 511A and a PWM signal 511B. In some such examples, the carrier wave generator 510 may output the PWM signal 511A and the PWM signal 511B to an amplifier and filter circuitry 512, for example, to filter a high frequency component out of the PWM signal 511A and amplify a low frequency component of the PWM signal 511A (e.g., an analog signal 513). That is, the amplifier and filter circuitry 512 may receive the PWM signal 511A and the PWM signal 511B and may output the analog signal 513. As depicted, the analog signal 513 may be an excitation signal for a resolver 514 (e.g., a resolver sensor).

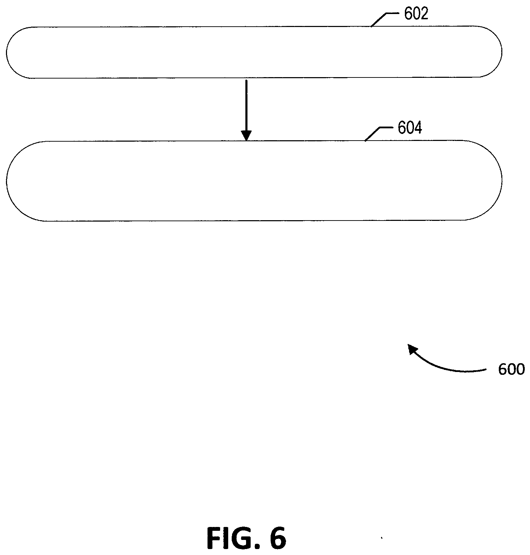

FIG. 6 illustrates a flowchart 600 of operations for a carrier wave generator (e.g., in a resolver system) in accordance with one or more embodiments of the present disclosure. The operations depicted in the flowchart may be implemented by a carrier wave generator, such as a carrier wave generator illustrated by and described with reference to FIGs. 1-5.

At operation 602, the carrier wave generator may obtain a digital input value at a sine wave generator circuitry included in the carrier wave generator. In some embodiments, the digital input value may be obtained via a frequency control word register. For example, the carrier wave generator may include (or be otherwise coupled to) one or more registers, including the frequency control word register, and the one or more registers may be communicable with a CPU via an APB interface. In some embodiments, the frequency control register may be associated with a software register, which a user may use to select (e.g., via a user interface associated with the software register) a frequency control word corresponding to the digital value. The phase accumulator circuitry may obtain the digital input value from the frequency control word register. The phase accumulator circuitry may be coupled to a phase-to-amplitude conversion circuitry included in the carrier wave generator. For example, the phase accumulator circuitry may be configured to output a set of phase values based on the digital input value, and the phase-to-amplitude conversion circuitry may be configured to receive the set of phase values and output a set of digital sine values. In some embodiments, the phase accumulator circuitry and the phase-to-amplitude conversion circuitry may be (or be included in) a numerically controlled oscillator circuitry. Additionally, in some embodiments, the phase-to-amplitude conversion circuitry may include (or be included in) a CORDIC circuitry.

At operation 604, the carrier wave generator may output at least one pulse width modulation signal via (e.g., from) a pulse width modulation timer circuitry coupled to the sine wave generator circuitry. For example, the pulse width modulation timer circuitry may be configured to output the at least one pulse width modulation signal based on the set of digital sine values output from the phase-to-amplitude conversion circuitry. In some embodiments, a frequency associated with the at least one pulse width modulation signal may be based on the digital input value. For example, the at least one pulse width modulation signal may be used to generate an analog carrier wave signal, in which a frequency of the analog carrier wave signal is based on the digital input value. For example, the at least one pulse width modulation signal may include a high frequency component and a low frequency component (e.g., may be a high frequency signal modulated at a low frequency). Accordingly, the carrier wave generator may pass the at least one pulse width modulation signal through (e.g., may output the at least one pulse width modulation signal to) a lowpass filter, which may be configured to filter the high frequency component out of the at least one pulse width modulation signal and output the analog signal 331.

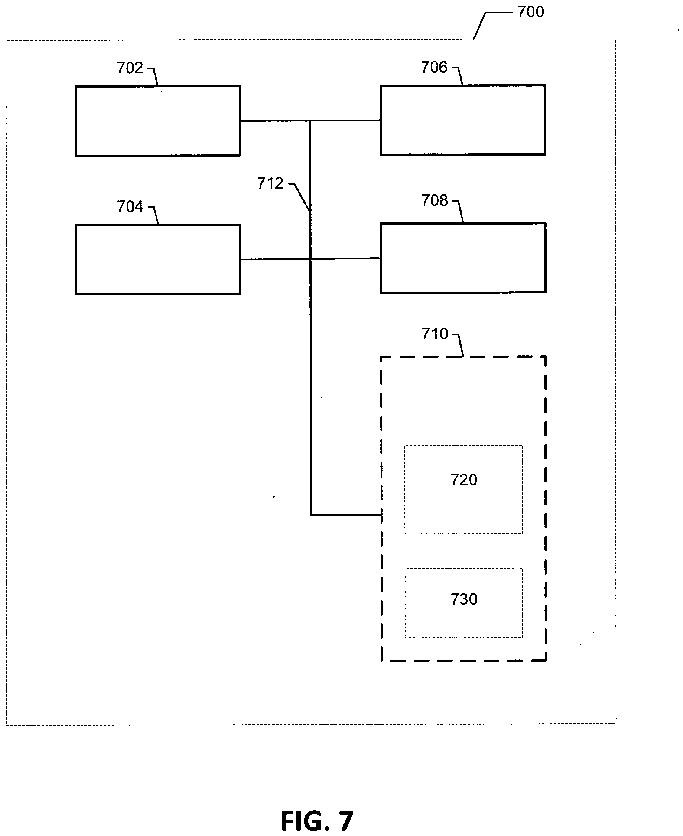

FIG. 7 illustrates an exemplary device 700 in accordance with one or more embodiments of the present disclosure. The device 700 may be a device for an application, apparatus, and/or a system. For example, the device 700 may be, or be implemented in, a resolver sensor system or a device for another application, such those described herein. The device 700 may be a system and/or apparatus that includes a processor 702, memory 704, communication circuitry 706, input/output circuitry 708, carrier wave generator 710, and all of which may be connected by a bus or buses 712. It should be appreciated that, in some embodiments, the device 700 may include or be otherwise coupled to one or more other components, such as a power source (e.g., a driver circuit, a traction inverter) and/or a load(s). The power source and/or a load(s) may be internal or external to the device 700. For example, the power source may be coupled to at least the carrier wave generator 710 via a bus or one or more connectors. Additionally, or alternatively, the load(s) may be coupled to at least the carrier wave generator 710 via bus or connectors.

The processor 702, although illustrated as a single block, may be comprised of a plurality of components and/or processor circuitry. The processor 702 may be implemented as, for example, various components comprising one or a plurality of microprocessors with accompanying digital signal processors; one or a plurality of processors without accompanying digital signal processors; one or a plurality of coprocessors; one or a plurality of multi-core processors; processing circuits; and various other processing elements. The processor may include integrated circuits. In various embodiments, the processor 702 may be configured to execute applications, instructions, and/or programs stored in the processor 702, memory 704, or otherwise accessible to the processor 702. When executed by the processor 702, these applications, instructions, and/or programs may enable the execution of one or a plurality of the operations and/or functions described herein. Regardless of whether it is configured by hardware, firmware/software methods, or a combination thereof, the processor 702 may comprise entities capable of executing operations and/or functions according to the embodiments of the present disclosure when correspondingly configured.

The memory 704 may comprise, for example, a volatile memory, a nonvolatile memory, or a certain combination thereof. Although illustrated as a single block, the memory 704 may comprise a plurality of memory components. In various embodiments, the memory 704 may comprise, for example, a random access memory, a cache memory, a flash memory, a hard disk, a circuit configured to store information, or a combination thereof. The memory 704 may be configured to write or store data, information, application programs, instructions, etc. so that the processor 702 may execute various operations and/or functions according to the embodiments of the present disclosure. For example, in at least some embodiments, a memory 704 may be configured to buffer or cache data for processing by the processor 702. Additionally or alternatively, in at least some embodiments, the memory 704 may be configured to store program instructions for execution by the processor 702. The memory 704 may store information in the form of static and/or dynamic information. When the operations and/or functions are executed, the stored information may be stored and/or used by the processor 702.

The communication circuitry 706 may be implemented as a circuit, hardware, computer program product, or a combination thereof, which is configured to receive and/or transmit data from/to another component or apparatus. The computer program product may comprise computer-readable program instructions stored on a computer-readable medium (e.g., memory 704) and executed by a processor 702. In various embodiments, the communication circuitry 706 (as with other components discussed herein) may be at least partially implemented as part of the processor 702 or otherwise controlled by the processor 702. The communication circuitry 706 may communicate with the processor 702, for example, through a bus 712. Such a bus 712 may connect to the processor 702, and it may also connect to one or more other components of the processor 702. The communication circuitry 706 may be comprised of, for example, transmitters, receivers, transceivers, network interface cards and/or supporting hardware and/or firmware/software, and may be used for establishing communication with another component(s), apparatus(es), and/or system(s). The communication circuitry 706 may be configured to receive and/or transmit data that may be stored by, for example, the memory 704 by using one or more protocols that can be used for communication between components, apparatuses, and/or systems.

The input/output circuitry 708 may communicate with the processor 702 to receive instructions input by an operator and/or to provide audible, visual, mechanical, or other outputs to an operator. The input/output circuitry 708 may comprise supporting devices, such as a keyboard, a mouse, a user interface, a display, a touch screen display, lights (e.g., warning lights), indicators, speakers, and/or other input/output mechanisms. The input/output circuitry 708 may comprise one or more interfaces to which supporting devices may be connected. In various embodiments, aspects of the input/output circuitry 708 may be implemented on a device used by the operator to communicate with the processor 702. The input/output circuitry 708 may communicate with the memory 704, the communication circuitry 706, and/or any other component, for example, through a bus 712.

The device 700 may include or be otherwise coupled to a series of registers, which may be used for setting one or more internal parameters, as well as data exchange with a CPU (e.g., the processor 702. The device 700 may include or be otherwise coupled to one or more interfaces (e.g., the input/output circuitry 708) for integration within the microcontroller, including an advanced peripheral bus (APB), a direct memory access (DMA) interface, an interface for system fault control and collection unit, and/or one or more other dedicated interfaces. The device 700 may also include or be otherwise coupled to one more clocks, including, but not limited to, a system clock (also referred to as a peripheral clock, which coupled to the carrier wave generator 710 and used for sine wave generation), a kernel clock (used as a synchronous and divided clock signal that starts from the system clock), and a system DMA clock for synchronization in the DMA interface. In some embodiments, the kernel clock may be referred to as a divided clock.

The carrier wave generator 710 may be an example of a carrier wave generator illustrated by and described with reference to FIGs. 1-6. For example, the carrier wave generator 710 may include a sine wave generator circuitry 720 and a PWM timer circuitry 730. The carrier wave generator 710 receive an input signal (e.g., an input digital value) and generate an analog sine wave excitation signal based on the input digital value. In some examples, the carrier wave generator 710 is coupled to a resolver sensor. In some such examples, the carrier wave generator 710 may output the analog sine wave excitation signal to the resolver sensor which may provide modulated feedback signals to the device 700. The device 700 may use the modulated feedback signals to determine (e.g., calculate) a position of an electric motor.

The device 700 may be implement in hardware, software, or a combination of hardware and software. In various embodiments, the device 700 may be embodied in an integrated circuit, an MCU (e.g., virtual machine running in an MCU), and/or the like.

It should be readily appreciated that the embodiments of the systems and apparatuses, described herein may be configured in various additional and alternative manners in addition to those expressly described herein.

### Conclusion

Operations and/or functions of the present disclosure have been described herein, such as in flowcharts. As will be appreciated, computer program instructions may be loaded onto a computer or other programmable apparatus (e.g., hardware) to produce a machine, such that the resulting computer or other programmable apparatus implements the operations and/or functions described in the flowchart blocks herein. These computer program instructions may also be stored in a computer-readable memory that may direct a computer, processor, or other programmable apparatus to operate and/or function in a particular manner, such that the instructions stored in the computer-readable memory produce an article of manufacture, the execution of which implements the operations and/or functions described in the flowchart blocks. The computer program instructions may also be loaded onto a computer, processor, or other programmable apparatus to cause a series of operations to be performed on the computer, processor, or other programmable apparatus to produce a computer-implemented process such that the instructions executed on the computer, processor, or other programmable apparatus provide operations for implementing the functions and/or operations specified in the flowchart blocks. The flowchart blocks support combinations of means for performing the specified operations and/or functions and combinations of operations and/or functions for performing the specified operations and/or functions. It will be understood that one or more blocks of the flowcharts, and combinations of blocks in the flowcharts, can be implemented by special purpose hardware-based computer systems which perform the specified operations and/or functions, or combinations of special purpose hardware with computer instructions.

While this specification contains many specific embodiments and implementation details, these should not be construed as limitations on the scope of any disclosures or of what may be claimed, but rather as descriptions of features specific to particular embodiments of particular disclosures. Certain features that are described herein in the context of separate embodiments can also be implemented in combination in a single embodiment. Conversely, various features that are described in the context of a single embodiment can also be implemented in multiple embodiments separately or in any suitable subcombination. Moreover, although features may be described above as acting in certain combinations and even initially claimed as such, one or more features from a claimed combination can in some cases be excised from the combination, and the claimed combination may be directed to a subcombination or variation of a subcombination.

While operations and/or functions are illustrated in the drawings in a particular order, this should not be understood as requiring that such operations and/or functions be performed in the particular order shown or in sequential order, or that all illustrated operations be performed, to achieve desirable results. In certain circumstances, operations and/or functions in alternative ordering may be advantageous. In some cases, the actions recited in the claims may be performed in a different order and still achieve desirable results. Thus, while particular embodiments of the subject matter have been described, other embodiments are within the scope of the following claims.

While this detailed description has set forth some embodiments of the present disclosure, the appended claims cover other embodiments of the present disclosure which differ from the described embodiments according to various modifications and improvements.

## Claims

1. A carrier wave generator (100; 300; 400; 510; 710) comprising:
- a sine wave generator circuitry (102; 304; 402), wherein the sine wave generator circuitry (102; 304; 402) comprises a phase accumulator circuitry (104; 304; 404) and a phase-to-amplitude conversion circuitry (106; 316; 414) coupled to the phase accumulator circuitry, wherein the phase accumulator circuitry (104; 304; 404) is configured to receive a digital input value (101; 301; 401) and output a set of phase values (103; 309; 405), and wherein the phase-to-amplitude conversion circuitry (106; 316; 414) is configured to receive the set of phase values (103; 309; 405) and output a set of digital sine values (105; 315; 415); and
- a pulse width modulation timer circuitry (108; 329; 424) coupled to the sine wave generator circuitry (102; 304; 402), wherein the pulse width modulation timer circuitry (108; 329; 424) is configured to receive the set of digital sine values (105; 315; 415) and output at least one pulse width modulation signal (325A, 325B; 425A, 425B) for generation of an analog carrier wave signal (107; 331; 513);
wherein a frequency of the analog carrier wave signal (107; 331; 513) is based at least in part on the digital input value (101; 301; 401).

2. The carrier wave generator of claim 1, wherein the phase accumulator circuitry (104; 304; 404) and the phase-to-amplitude conversion circuitry (106; 316; 414) comprise a numerically controlled oscillator circuitry.

3. The carrier wave generator of claim 1 or claim 2, wherein the phase-to-amplitude conversion circuitry (106; 316; 414) comprises a coordinate rotation digital computer circuitry.

4. The carrier wave generator of any of the previous claims, wherein the phase accumulator circuitry (104; 304; 404) is further configured to receive the digital input value (101; 301; 401) from a user of the carrier wave generator (101; 301; 401) via a user interface (406).

5. The carrier wave generator of any of the previous claims, wherein the pulse width modulation timer circuitry (108; 329; 424) is further configured to receive a kernel clock frequency value from a user of the carrier wave generator (101; 301; 401) via a user interface (406), and wherein a resolution associated with the pulse width modulation timer circuitry (108; 329; 424) is based at least in part on the kernel clock frequency value.

6. The carrier wave generator of any of the previous claims, wherein the at least one pulse width modulation signal (325A, 325B; 425A, 425B) comprises a first pulse width modulation signal and a second pulse width modulation signal that is complementary to the first pulse width modulation signal.

7. The carrier wave generator of any of the previous claims, wherein the pulse width modulation timer circuitry (108; 329; 424) is coupled to an amplifier and filter circuitry (330; 512), and wherein the amplifier and filter circuitry (330; 512) is configured to receive the at least one pulse width modulation signal (325A, 325B; 425A, 425B) and output the analog carrier wave signal (107; 331; 513).

8. The carrier wave generator of any of the previous claims, wherein the digital input value (101; 301; 401) is based at least in part on at least one of the following: the frequency associated with the analog carrier wave signal (107; 331; 513), a second frequency associated with a divided clock signal input to the sine wave generator circuitry (313A; 313B; 403), or a bit-length associated with the phase accumulator circuitry (104; 304; 404).

9. A system comprising:
- a carrier wave generator (100; 300; 400; 510; 710) according to any of the previous claims 1 to 8; and
- an amplifier and filter circuitry (330; 512) coupled to the carrier wave generator (100; 300; 400; 510; 710), wherein the amplifier and filter circuitry (330; 512) is configured to receive the at least one pulse width modulation signal (325A, 325B; 425A, 425B) and output the analog carrier wave signal 107; 331; 513).

10. A method of operating a carrier wave generator (100; 300; 400; 510; 710) according to any of the previous claims 1 to 8, comprising:
- obtaining a digital input value (101; 301; 401) at the sine wave generator circuitry (102; 304; 402), and
- outputting at least one pulse width modulation signal (325A, 325B; 425A, 425B) from the pulse width modulation timer circuitry (108; 329; 424) coupled to the sine wave generator circuitry (102; 304; 402), .

11. The method of claim 10, further comprising:
- obtaining a kernel clock frequency value at the pulse width modulation timer circuitry (108; 329; 424), wherein a resolution associated with the pulse width modulation timer circuitry (108; 329; 424) is based at least in part on the kernel clock frequency value.
